(19) Europäisches Patentamt
European Patent Office
Office européen des brevets

(11) **EP 3 475 665 B1**

(12) **EUROPÄISCHE PATENTSCHRIFT**

(45) Veröffentlichungstag und Bekanntmachung des Hinweises auf die Patenterteilung:
**27.12.2023  Patentblatt 2023/52**

(21) Anmeldenummer: **17734711.9**

(22) Anmeldetag: **28.06.2017**

(51) Internationale Patentklassifikation (IPC):
***G01F 1/60*** (2006.01)

(52) Gemeinsame Patentklassifikation (CPC):
**G01F 1/60**

(86) Internationale Anmeldenummer:
**PCT/EP2017/065991**

(87) Internationale Veröffentlichungsnummer:
**WO 2018/002135 (04.01.2018 Gazette 2018/01)**

(54) **MAGNETISCH-INDUKTIVER DURCHFLUSSMESSER**

MAGNETICALLY INDUCTIVE FLOWMETER

DÉBITMÈTRE À INDUCTION MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2016  DE 102016211577**

(43) Veröffentlichungstag der Anmeldung:
**01.05.2019  Patentblatt 2019/18**

(73) Patentinhaber: **Siemens Aktiengesellschaft 80333 München (DE)**

(72) Erfinder:
• **ISIK-UPPENKAMP, Sonnur 24955 Harrislee (DE)**
• **MONDRUP, Niels Per 6440 Augustenborg (DK)**

(74) Vertreter: **Siemens Patent Attorneys Postfach 22 16 34 80506 München (DE)**

(56) Entgegenhaltungen:
EP-B1- 1 042 651          DE-A1- 2 410 407
DE-A1-102007 053 222    DE-C1- 19 716 119
US-A- 5 388 465

EP 3 475 665 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen magnetisch-induktiven Durchflussmesser mit einer Messstrecke, die von einem Medium durchströmt wird, mit einer Einrichtung zur Erzeugung eines Magnetfelds wechselnder Polarität, mit einer Elektrodenanordnung und mit einer Ansteuer- und Auswerteeinrichtung gemäß dem Oberbegriff des Anspruchs 1.

Magnetisch-induktive Durchflussmesser nutzen das Faradaysche Induktionsgesetz zur Bestimmung der Strömungsgeschwindigkeit eines durchströmenden Fluids. Ein magnetisches Feld wird senkrecht zu der Strömungsrichtung erzeugt. In diesem Magnetfeld entsteht aufgrund von Ladungen, die mit dem Fluid transportiert werden, eine Spannung senkrecht zu dem Magnetfeld und zu der Durchflussrichtung, die mit Hilfe von Elektroden gemessen werden kann. Die so entlang der Messstrecke ermittelte Messspannung ist proportional zu einer über den Strömungsquerschnitt bestimmten Strömungsgeschwindigkeit.

Für die Erfassung der induzierten Spannung mit Elektroden ist, insbesondere wenn die Elektroden das Medium galvanisch kontaktieren, eine gewisse Leitfähigkeit des Mediums erforderlich. Zudem sollte das Medium eine gute Homogenität besitzen, damit die Messstrecke, über welcher die induzierte Spannung mit den beiden Elektroden erfasst wird, keine elektrisch nicht leitende Gasblasen, Feststoffpartikel oder Flüssigkeitstropfen einschließt. In nachteiliger Weise führen derartige Einschlüsse elektrisch nicht leitenden Materials nämlich zu einem verrauschten Signal bei der Erfassung der induzierten Spannung und damit zu einer Verschlechterung der Messgenauigkeit, insbesondere wenn sich die Einschlüsse nahe bei den Elektroden befinden.

Eine weitere Ursache für Rauschsignale im Messsignal sind Schwankungen des Elektrodenpotentials aufgrund elektrochemischer Effekte. Das leitfähige Medium und die Elektrode, welche dieses kontaktiert, bilden nämlich eine elektrochemische Zelle. In dieser entsteht ein Elektrodenpotential, welches allgemein durch die elektromotorische Kraft, die eine Elektrode einer elektrochemischen Zelle liefert, definiert wird. Wenn zwei identische Metallelektroden einander gegenüberliegend im selben Elektrolyt angeordnet werden, ist zwischen beiden Elektroden im Idealfall die Potentialdifferenz gleich Null. Dagegen können Abweichungen von diesem Idealfall, zum Beispiel unterschiedliche Oberflächenbeschaffenheit der Elektroden, abweichende Kontamination der Elektrodenoberflächen, inhomogene Verteilung der Elektrolytkonzentration oder dessen ph-Werts, Lochfraß, Rauheit oder Korrosion der Elektrodenoberflächen, Bildung von Ablagerungen oder kurzeitige Blasenbildung auf den Elektroden, zur dauerhaften oder kurzzeitigen Entstehung von Potentialdifferenzen zwischen den Elektroden führen, welche das Messsignal des magnetisch-induktiven Durchflussmessers verfälschen. Einige dieser Ursachen können in dem an den Elektroden abgegriffenen Messsignal sogar ausgeprägte Spannungsspitzen hervorrufen.

Zur Verringerung des im Messsignal enthaltenen, durch elektrochemische Reaktionen verursachten Rauschsignals gibt es verschiedene Lösungsansätze. Bereits ein Polieren der Elektrodenoberfläche zur Verringerung der Rauheit und eine Steigerung der Oberflächenhärte beispielsweise durch Bilden einer homogenen Oxidschicht an der Oberfläche, durch welche zudem das Auftreten von Materialeinschlüssen an der Oberfläche reduziert wird, können zu einem stabileren und weniger rauschbehafteten Messsignal führen.

Im Langzeitbetrieb eventuell entstehende Kalkablagerungen oder inhomogene Geschwindigkeitsverteilungen im fließenden Medium beim Betrieb des Durchflussmessers sind weitere Ursachen für die Entstehung von Rauschsignalen. Maßnahmen der Oberflächenbehandlung von Elektroden können daher alleine nicht als ausreichend angesehen werden.

Aus der US 4 644 799 A ist ein magnetisch-induktiver Durchflussmesser bekannt, bei welchem zur Beseitigung niederfrequenter Rauschsignale das an den Elektroden abgegriffene Messsignal um ein ganzzahliges Vielfaches einer Halbperiode, die der Frequenz der Polaritätswechsel des Magnetfeldes entspricht, verzögert wird. Zur weiteren Verarbeitung wird die Differenz zwischen dem so verzögerten und dem unverzögerten Messsignal ermittelt. Höherfrequente Rauschsignale wirken sich dabei in nachteiliger Weise jedoch weiterhin störend auf das Messergebnis aus.

Dasselbe gilt für einen aus der DE 197 16 119 C1 bekannten magnetisch-induktiven Durchflussmesser, der dazu ausgebildet ist, Störsignalanteile in Form von Gleichspannungen und Gleichtaktsignalen aus dem Messsignal zu beseitigen. Dazu werden an den Elektroden gegenüber einem Bezugspotential erfasste Spannungssignale mit unterschiedlichen Faktoren +2 und -2 gewichtet und zusammen mit einem mit einem Faktor -2 gewichteten Mittelwert aus beiden gewichteten Spannungssignalen addiert. Der Mittelwert durchläuft einen Allpass, der Signale mit einer Frequenz größer als die Wechselfrequenz des Magnetfeldes um einen Phasenwinkel von 180° verschiebt. Störsignalanteile in Form von Gleichspannungen und Gleichtaktsignalen erfahren daher keine Phasenverschiebung und addieren sich zu Null, während Nutzsignalanteile ebenso wie höherfrequentes Rauschen nicht unterdrückt werden.

Der Erfindung liegt die Aufgabe zugrunde, einen magnetisch-induktiven Durchflussmesser mit verbesserter Unempfindlichkeit gegenüber Rauschen zu schaffen.

Zur Lösung dieser Aufgabe weist der neue magnetisch-induktive Durchflussmesser der eingangs genannten Art die im kennzeichnenden Teil des Anspruchs 1 angegebenen Merkmale auf. In den abhängigen Ansprüchen sind vorteilhafte Weiterbildungen der Erfindung beschrieben.

Die Erfindung hat den Vorteil, das sowohl niederfrequente als auch hochfrequente Signalanteile im Messsignal, welche die oben beschriebenen Ursachen haben können, aufgrund der neuartigen Signalverarbeitung selbst im Langzeitbetrieb des magnetisch-induktiven Durchflussmessers wirksam unterdrückt werden. Die Rauschsignalunterdrückung ist insbesondere bei Gasblasen im Bereich der Elektroden, inhomogener Verteilung der Strömungsgeschwindigkeit des Mediums oder Schwankungen der Elektrolytkonzentration, die zu Spannungsspitzen im Messsignal führen können, deutlich wirksamer als die oben beschriebenen bekannten Verfahren. Da die genannten Vorteile alleine durch Veränderungen erreicht werden, die an der Signalverarbeitung vorgenommen werden, sind in vorteilhafter Weise keine zusätzlichen Komponenten gegenüber herkömmlichen Durchflussmessern erforderlich. Ohne nennenswerte Erhöhung des Herstellungsaufwands kann somit ein magnetisch-induktiver Durchflussmesser mit geringerer Empfindlichkeit gegenüber Rauschen des Messsignals und somit verbesserter Messgenauigkeit erhalten werden.

Zudem erlaubt die Extraktion des jeweiligen Rauschsignals aus den beiden Spannungssignalen, die jeweils zwischen einer Messelektrode und dem Bezugspotential erfasst werden, in besonders einfacher Weise eine Diagnose des Zustands des Durchflussmessers auf der Basis eines Schwellwertvergleichs. Die Diagnoseaussagen, die auf diese Weise erhalten werden können, betreffen beispielsweise das Vorhandensein von Gasblasen in Flüssigkeiten, Schwankungen der elektrischen Leitfähigkeit des Mediums, ph-Wert-Schwankungen und/oder den Befüllungszustand des Messrohrs. Die erhaltenen Diagnoseaussagen können über eine Kommunikationsschnittstelle beispielsweise an eine übergeordnete Leitstation in einer prozesstechnischen Anlage weitergegeben werden. Wird mittels der Diagnoseaussage ein Fehlerzustand angezeigt, so können eventuell erforderliche Wartungsmaßnahmen zur Fehlervermeidung oder Fehlerbehebung eingeleitet werden.

Gemäß einer besonders vorteilhaften Weiterbildung der Erfindung ist zur Erfassung des Bezugspotentials, welches zur Bestimmung der Elektrodenpotentiale der beiden Messelektroden genutzt wird, eine Bezugspotentialelektrode vorgesehen, die vorzugsweise aus dem gleichen Material wie die beiden Messelektroden besteht und ebenfalls das zu messende Medium galvanisch kontaktiert. Die Bezugspotentialelektrode kann an oder in der Wand eines Messrohrs beispielsweise in dessen Umfangsbereich zwischen den beiden Messelektroden angeordnet sein. Die zur Messung genutzten drei Elektroden sind in diesem Fall alle den gleichen Strömungsbedingungen und elektrochemischen Einflüssen ausgesetzt. Aufgrund der erfindungsgemäßen Erfassung der Potentialdifferenzen kann damit der Anteil des Rauschsignals in den beiden Spannungssignalen bereits bei der Signalerfassung gering gehalten werden.

Zur Extraktion des Rauschsignals aus den beiden erfassten Spannungssignalen können in einfacher Weise Kerbfilter (engl.: notch filter) verwendet werden, deren Sperrfrequenz auf die Frequenz der Polaritätswechsel des Magnetfeldes abgestimmt ist. Die Frequenzanteile des Nutzsignals, welches der über der Messstrecke in das fließende Medium induzierten Spannung entspricht, liegen nämlich in einem schmalen Bereich um die Frequenz des Magnetfelds oder deren Vielfache und können daher mit einem oder mehreren Kerbfiltern mit darauf jeweils abgestimmter Sperrfrequenz effektiv herausgefiltert werden.

Kerbfilter wie auch Filter allgemein können eine gewisse Verzögerung zwischen dem ausgegebenen gefilterten Signal und dem ungefilterten Eingangssignal verursachen. Eine weitere Verbesserung der Rauschunterdrückung kann daher erreicht werden, indem das erste Spannungssignal vor seiner Aufsummierung mit dem zweiten Rauschsignal sowie das zweite Spannungssignal vor seiner Aufsummierung mit dem ersten Rauschsignal zur Kompensation der jeweils bei ihrer Filterung entstehenden Signalverzögerung ebenfalls verzögert werden. Eine derartige Weiterbildung der Erfindung ist bei Verwendung digitaler Filter und digitaler Signalverarbeitung mit geringem Aufwand realisierbar.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1    eine Prinzipdarstellung eines magnetisch-induktiven Durchflussmessers und

Figur 2    ein Blockschaltbild zur Verdeutlichung der Signalverarbeitung.

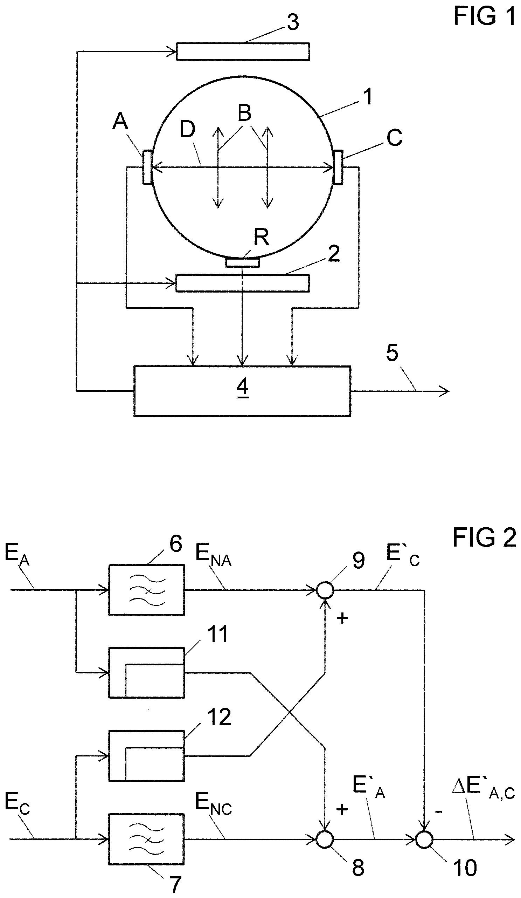

Gemäß Figur 1 weist ein magnetisch-induktiver Durchflussmesser ein Messrohr 1 auf, das senkrecht zur Zeichnungsebene verläuft und von einem Medium durchflossen wird, dessen Volumenfluss erfasst werden soll. Mittels Magnetspulen 2 und 3, die an Außenseiten des Messrohrs 1 angebracht sind, wird im Rohrinnern und damit im Fließmedium ein Magnetfeld B wechselnder Polarität erzeugt, indem in die Spulen 2 und 3 beispielsweise ein Gleichstrom wechselnder Polarität eingespeist wird. Beiderseits einer Messstrecke D sind Messelektroden A und C angeordnet und beispielsweise am Boden des Messrohrs 1 eine Referenzelektrode R, die als Bezugspotentialelektrode dient. Die Messelektroden A und C begrenzen die Messstrecke D, deren Länge im gezeigten Ausführungsbeispiel dem Durchmesser des Messrohrs 1 entspricht. Bei fließendem Medium wird über der Messstrecke D aufgrund des Magnetfelds B eine Spannung induziert, die mittels der Elektrodenanordnung, welche die Messelektroden A und C sowie die Bezugspotentialelektrode R umfasst, und einer Ansteuer- und Auswerteeinrichtung 4 bestimmt wird. Die Ansteuer- und Auswerteeinrichtung 4 ermittelt also die über der Messstrecke D induzierte Spannung, berechnet aus dieser einen Messwert für den Durchfluss und ermittelt eine Diagnoseaussage über den Zustand des Durchflussmessers. Die erhaltenen Ergebnisse können über eine Kommunikationsschnittstelle 5 beispielsweise an eine übergeordnete Leitstation in einer prozesstechnischen Anlage weitergegeben werden.

Anhand Figur 2 wird im Folgenden näher erläutert, auf welche vorteilhafte Weise in der Ansteuer- und Auswerteeinrichtung 4 ein Messsignal gewonnen wird, das mit verbesserter Unempfindlichkeit gegenüber Rauschen genauer als bisher die vom Durchfluss des Mediums hervorgerufene induzierte Spannung repräsentiert. Es wird ein erstes elektrisches Spannungssignal $E_A$ erfasst, indem die Spannung zwischen der Elektrode A (Figur 1) und einem Bezugspotential abgegriffen wird. Als Bezugspotential dient dabei vorzugsweise das an der Referenzelektrode R (Figur 1) abgegriffene Potential.

Analog dazu wird ein zweites Spannungssignal $E_C$ mittels der Elektrode C (Figur 1), die auf der gegenüberliegenden Seite der Messstrecke D angeordnet ist, und der Referenzelektrode R erfasst. Das erste Spannungssignal $E_A$ und das zweite Spannungssignal $E_C$ können jeweils als Überlagerung eines von Durchfluss abhängigen Nutzsignals $E_{SA}$ bzw. $E_{SC}$ und eines dazu unkorrelierten Rauschsignals $E_{NA}$ bzw. $E_{NC}$ angesehen werden. Es gilt daher:

$$E_A = E_{SA} + E_{NA}$$

und

$$E_C = E_{SC} + E_{NC}.$$

Mit jeweils einem Kerbfilter 6 bzw. 7 werden aus dem ersten Spannungssignal $E_A$ und dem zweiten Spannungssignal $E_C$ die durch die oben beschriebenen elektrochemischen Effekte verursachten Signalanteile herausgefiltert und so das erste Rauschsignal $E_{NA}$ und das zweite Rauschsignal $E_{NC}$ gewonnen. Die Sperrfrequenz der Kerbfilter 6 und 7 ist auf die Frequenz der Polaritätswechsel des Magnetfelds B (Figur 1) abgestimmt. Das erste Rauschsignal $E_{NA}$ sowie das zweite Rauschsignal $E_{NC}$ sind somit von den Signalanteilen, die vom Durchfluss herrühren, befreit. In Summationsgliedern 8 und 9 wird das erste Spannungssignal $E_A$ und das zweite Rauschsignal $E_{NC}$ zur Erzeugung eines ersten Summensignals $E'_A$ bzw. das zweite Spannungssignal $E_C$ und das erste Rauschsignal $E_{NA}$ zur Erzeugung eines zweiten Summensignals $E'_C$ aufsummiert. Es gelten dabei die Formeln:

$$E'_A = E_{SA} + E_{NA} + E_{NC}$$

und

$$E'_C = E_{SC} + E_{NC} + E_{NA}.$$

Zur Gewinnung eines Messsignals $\Delta E'_{A,C}$, welches der über der Messstrecke D induzierten Spannung entspricht, werden das erste Summensignal $E'_A$ sowie das zweite Summensignal $E'_C$ auf einen Subtrahierer 10 geführt. Es gilt somit:

$$\Delta E'_{A,C} = E'_A - E'_C = (E_{SA} + E_{NA} + E_{NC}) - (E_{SC} + E_{NC} + E_{NA})$$
$$= E_{SA} - E_{SC}.$$

Unter der Annahme idealer Eigenschaften der Kerbfilter kann auf diese Weise ein Messsignal erhalten werden, welches in idealer Weise von Rauschanteilen befreit ist und lediglich die vom Durchfluss des Mediums hervorgerufene induzierte Spannung repräsentiert.

Für den Fall, dass durch die Kerbfilter 6 und 7 eine Verzögerung der Signale verursacht wird, können zur Kompensation geeignete Totzeitglieder 11 bzw. 12 in die jeweils parallelen Signalpfade eingefügt werden, welche vorteilhaft dieselbe Verzögerung bewirken.

Durch die neuartige Signalverarbeitung wird somit ein elektromagnetischer Durchflussmesser erhalten, mit welchem eine Langzeiteliminierung des durch elektrochemische Reaktionen verursachten Rauschens gewährleistet werden kann. Daraus resultieren weiterhin ein stabileres Messsignal mit geringerer Störanfälligkeit und verbessertem Signalrauschverhältnis sowie schließlich eine höhere Messgenauigkeit des Durchflussmessers.

**EP 3 475 665 B1**

Patentansprüche

1. Magnetisch-induktiver Durchflussmesser

mit einer Messstrecke (D), die von einem Medium durchströmt wird,
mit einer Magnetfelderzeugungseinrichtung (2, 3) zur Erzeugung eines Magnetfelds (B) wechselnder Polarität,
mit einer Elektrodenanordnung (A, C, R) zur galvanisch kontaktierenden Erfassung einer von der Strömungsgeschwindigkeit des Mediums abhängigen und über einer Messstrecke (D) zwischen einer ersten Elektrode (A) und einer zweiten Elektrode (C) induzierten Spannung und
mit einer Ansteuer- und Auswerteeinrichtung (4) zur Ansteuerung der Magnetfelderzeugungseinrichtung (2, 3) und zur Bestimmung und Ausgabe eines Messwerts in Abhängigkeit von der erfassten Spannung, **dadurch gekennzeichnet, dass** die Ansteuer- und Auswerteeinrichtung (4) derart ausgebildet ist, dass ein erstes Spannungssignal ($E_A$) zwischen der ersten Elektrode (A) und einem Bezugspotential (R) erfasst und zur Gewinnung eines darin enthaltenen, ersten Rauschsignals ($E_{NA}$) gefiltert wird,
dass ein zweites Spannungssignal ($E_C$) zwischen der zweiten Elektrode (C) und dem Bezugspotential (R) erfasst und zur Gewinnung eines darin enthaltenen, zweiten Rauschsignals ($E_{NC}$) gefiltert wird,
dass das erste Spannungssignal ($E_A$) und das zweite Rauschsignal ($E_{NC}$) zur Erzeugung eines ersten Summensignals ($E'_A$) aufsummiert werden,
dass das zweite Spannungssignal ($E_C$) und das erste Rauschsignal ($E_{NA}$) zur Erzeugung eines zweiten Summensignals ($E'_C$) aufsummiert werden und
dass zur Gewinnung eines Messsignals ($\Delta E'_{A,C}$), welches der über der Messstrecke (D) induzierten Spannung entspricht, die Differenz des ersten Summensignals ($E'_A$) und des zweiten Summensignals ($E'_C$) gebildet wird.

2. Magnetisch-induktiver Durchflussmesser nach Anspruch 1, **dadurch gekennzeichnet, dass** die Ansteuer- und Auswerteeinrichtung (4) weiterhin derart ausgebildet ist, dass das erste Rauschsignal ($E_{NA}$) und/oder das zweite Rauschsignal ($E_{NC}$) zur Bestimmung einer Diagnoseaussage auf Überschreiten einer vorgebbaren Schwelle überwacht werden.

3. Magnetisch-induktiver Durchflussmesser nach Anspruch 1 oder 2, **dadurch gekennzeichnet, dass** die Elektrodenanordnung (A, C, R) mit einer Bezugspotentialelektrode (R) zur Erfassung des Bezugspotentials versehen ist.

4. Magnetisch-induktiver Durchflussmesser nach einem der vorhergehenden Ansprüche, **dadurch gekennzeichnet, dass** die Ansteuer- und Auswerteeinrichtung (4) zur Gewinnung des ersten Rauschsignals ($E_{NA}$) und des zweiten Rauschsignals ($E_{NC}$) jeweils zumindest ein Kerbfilter (6, 7) umfasst, dessen Sperrfrequenz auf die Frequenz der Polaritätswechsel des Magnetfeldes (B) abgestimmt ist.

5. Magnetisch-induktiver Durchflussmesser nach einem der vorhergehenden Ansprüche, **dadurch gekennzeichnet, dass** die Ansteuer- und Auswerteeinrichtung (4) weiterhin derart ausgebildet ist, dass das erste Spannungssignal ($E_A$) vor seiner Aufsummierung mit dem zweiten Rauschsignal ($E_{NC}$) zur Kompensation einer beim Filtern des ersten Spannungssignals ($E_A$) entstehenden Signalverzögerung durch ein Totzeitglied (11) verzögert wird und
dass das zweite Spannungssignal ($E_C$) vor seiner Aufsummierung mit dem ersten Rauschsignal ($E_{NA}$) zur Kompensation einer beim Filtern des zweiten Spannungssignals ($E_C$) entstehenden Signalverzögerung durch ein Totzeitglied (12) verzögert wird.

Claims

1. Magnetically inductive flowmeter

with a measurement section (D), through which a medium flows, with a magnetic field creation device (2, 3) for creating a magnetic field (B) of alternating polarity,
with an electrode arrangement (A, C, R) for capturing a voltage, which is dependent on the flow speed of the medium and is induced over the measurement section (D) between a first electrode (A) and a second electrode (C), in a galvanically contacting manner and
with a control and evaluation device (4) for activating the magnetic field creation device (2, 3) and for determining and outputting a measurement value depending on the voltage captured, **characterised in that** the control and evaluation device (4) is embodied such that
a first voltage signal ($E_A$) is captured between the first electrode (A) and a reference potential (R) and is filtered to obtain a first noise signal ($E_{NA}$) contained therein,
a second voltage signal ($E_C$) is captured between the second electrode (C) and the reference potential (R) and is filtered to obtain a second noise signal ($E_{NC}$) contained therein,
the first voltage signal ($E_A$) and the second noise signal ($E_{NC}$) are summed to create a first sum signal ($E'_A$),
the second voltage signal ($E_C$) and the first noise signal ($E_{NA}$) are summed to create a second sum signal ($E'_C$) and
to obtain a measurement signal ($\Delta E'_{A,C}$), which corresponds to the voltage induced over the measurement section (D), the difference of the first sum signal ($E'_A$) and the second sum signal ($E'_C$) is formed.

2. Magnetically inductive flowmeter according to claim 1, **characterised in that** the control and evaluation device (4) is furthermore embodied such that the first noise signal ($E_{NA}$) and/or the second noise signal ($E_{NC}$) are monitored to determine diagnostic information that a predetermined threshold has been exceeded.

3. Magnetically inductive flowmeter according to claim 1 or 2, **characterised in that** the electrode arrangement (A, C, R) is provided with a reference potential electrode (R) for capturing a reference potential.

4. Magnetically inductive flowmeter according to one of the preceding claims, **characterised in that** the control and evaluation device (4), in order to obtain a first noise signal ($E_{NA}$) and the second noise signal ($E_{NC}$), comprises at least one notch filter (6, 7) in each case, of which the blocking frequency is tuned to the frequency of the polarity change of the magnetic field (B).

5. Magnetically inductive flowmeter according to one of the preceding claims, **characterised in that** the control and evaluation device (4) is furthermore embodied such that the first voltage signal ($E_A$), before it has been summed with the second noise signal ($E_{NC}$), is delayed by a delay element (11) to compensate for a signal delay arising during the filtering of the first voltage signal ($E_A$) and
that the second voltage signal ($E_C$), before it has been summed with the first noise signal ($E_{NA}$) is delayed by a delay element (12) to compensate for a signal delay arising during the filtering of the second voltage signal ($E_C$).

**Revendications**

1. Débitmètre à induction magnétique,

comprenant une section (D) de mesure, dans lequel passe un fluide, comprenant un dispositif (2, 3) de production de champ magnétique pour la production d'un champ (B) magnétique de polarité alternée, comprenant un agencement (A, C, R) d'électrodes pour la détection par contact galvaniquement d'une tension en fonction de la vitesse d'écoulement du fluide et induite aux bornes d'une section (D) de mesure entre une première électrode (A) et une deuxième électrode (C) et
comprenant un dispositif (4) de commande et d'analyse pour la commande du dispositif (2, 3) de production de champ magnétique et pour la détermination et l'émission d'une valeur de mesure en fonction de la tension détectée, **caractérisé en ce que** le dispositif (4) de commande et d'analyse est constitué de manière à ce qu'un premier signal ($E_A$) de tension entre la première électrode (A) et un potentiel (R) de référence soit détecté et soit filtré, pour l'obtention d'un premier signal ($E_{NA}$) de bruit, qui y est contenu,
**en ce que** l'on détecte un deuxième signal ($E_C$) de tension, entre la deuxième électrode (C) et le potentiel (R) de référence, et on le filtre pour l'obtention d'un deuxième signal ($E_{NC}$) de bruit, qui y est contenu,
**en ce que** l'on fait la somme du premier signal ($E_A$) de tension et du deuxième signal ($E_{NC}$) de bruit pour la production d'un premier signal ($E'_A$) de somme,
**en ce que** l'on fait la somme du deuxième signal ($E_C$) de tension et du premier signal ($E_{NA}$) de bruit pour la production d'un deuxième signal ($E'_C$) de somme et
**en ce que** pour l'obtention d'un signal ($\Delta E'_{A,C}$) de mesure, qui correspond à la tension induite aux bornes de la section (D) de mesure, on forme la différence entre le premier signal ($E'_A$) de somme et le deuxième signal ($E'_C$) de somme.

2. Débitmètre à induction magnétique suivant la revendication 1, **caractérisé en ce que** le dispositif (4) de commande et d'analyse est constitué en outre de manière à contrôler le premier signal ($E_{NA}$) de bruit et/ou le deuxième signal ($E_{NC}$) de bruit pour la détermination d'un diagnostic sur un dépassement d'un seuil pouvant être donné à l'avance.

3. Débitmètre à induction magnétique suivant la revendication 1 ou 2, **caractérisé en ce que** l'agencement (A, C, R) d'électrodes est pourvu d'une électrode (R) de potentiel de référence pour la détection du potentiel de référence.

**4.** Débitmètre à induction magnétique suivant l'une des revendications précédentes, **caractérisé en ce que** le dispositif (4) de commande et d'analyse comprend, pour l'obtention du premier signal ($E_{NA}$) de bruit et du deuxième signal ($E_{NC}$) de bruit, respectivement au moins un filtre (6, 7) coupe bande, dont la fréquence d'arrêt est accordée à la fréquence du changement de polarité du champ (B) magnétique.

**5.** Débitmètre à induction magnétique suivant l'une des revendications précédentes, **caractérisé en ce que** le dispositif (4) de commande et d'analyse est constitué en outre de manière à ce que le premier signal ($E_A$) de tension soit, avant sa sommation avec le deuxième signal ($E_{NC}$) de bruit, retardé par un organe (11) de temps mort pour la compensation d'un retard de signal se créant au filtrage du premier signal ($E_A$) de tension et

**en ce que** le deuxième signal ($E_C$) de tension soit, avant sa sommation avec le premier signal ($E_{NA}$) de bruit, retardé par un organe (12) de temps mort pour la compensation d'un retard de signal se créant lors du filtrage du deuxième signal ($E_C$) de tension.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4644799 A
- DE 19716119 C1